# EUROPEAN PATENT APPLICATION

(11) **EP 4 477 082 A1**
(43) Date of publication of application: **18.12.2024**
(21) Application number: 23749377.0
(22) Date of filing: 02.02.2023
(51) Int. Cl.: A01N 25/00, C09K 11/77, A01N 33/12, A01N 55/02, G01N 21/63

(54) **BIOCIDAL PRODUCT WITH LUMINESCENT MARKER ADDITIVE AND APPLICATION OF SAME ON NON-POROUS HARD SURFACES**

(30) Priority: 04.02.2022 ES 202230085
(71) Applicant: Ancor Tecnológica Canaria, S.L., 35017 Las Palmas de Gran Canaria (Las Palmas) (ES)
(72) Inventor: BELTRÁN AZNAR, Noelia, 35017 Las Palmas de Gran Canaria Las Palmas (ES)
(74) Representative: De la Fuente Fernandez, Dionisio
(86) International application number: PCT/ES2023/070052
(87) International publication number: WO 2023/148416

(57) **Abstract**

The present invention discloses a biocidal product for application to surfaces, particularly non-porous hard surfaces or the like, incorporating a luminescent identification marker which makes it possible to certify the presence of the product and therefore that protection is maintained, in addition to certifying its originality using luminescence encryption techniques. This biocidal composition enables its continuous disinfection action 24 hours a day, 7 days a week and is formed by the mixture of a biocidal composition and a luminescent additive dispersed therein, wherein the biocidal composition includes a mixture of biocidal agents formed by the combination of 0.5-5.0% dimethyl didecyl ammonium chloride and 0.5-5.0% dimethyloctadecyl[3-(trimethoxysilyl)propyl] ammonium chloride of a biocidal nature and a silver ion solution preferably consisting of silver phosphate glass in a proportion of 0.1-1%, and the luminescent additive includes aluminosilicate metal oxides containing rare earth ions as dopants.

## Description

### OBJECT OF THE INVENTION

The present invention discloses a biocidal product for the application thereof especially on non-porous hard surfaces, incorporating an additive that allows the identification of its presence by means of a luminescent effect, whereby it ensures that the surface has been previously treated with said biocidal product, allowing the user to be confident and assured that the product is present, as well as certifying its originality with luminescence encryption techniques.

### BACKGROUND OF THE INVENTION

Microbial pathogens may be present on surfaces, for example, bacterial biofilms arranged on the surface of materials such as metal, plastic, glass, wood and the like, such as medical or food preparation tools or work areas; and microbial pathogens may be arranged within porous materials such as fibres, fabrics and the like, such as wound treatment materials. Contamination of materials exhibits significant medical and public health risks, and the biocidal treatment of surfaces and materials is vital, for example, to block the transmission of diseases caused by microbial pathogens from person to person, to prevent infection of wounds by pathogens in the environment, to prevent microbial-mediated food poisoning arising from contact of foodstuffs with contaminated work surfaces or personnel.

Bacterial biofilms are aggregates of microbial cells adhered to each other on a surface, producing a matrix of extracellular polymeric substance. 1,2 Bacterial cells growing in biofilms are physiologically different from planktonic bacteria (freely suspended in a liquid medium) and a major source of public health problems. 2,3 Bacteria in these biofilms have slow growth rates and increased resistance to antimicrobials and host defence systems. Although several techniques have been developed to prevent biofilm formation and produce surface disinfection, it is difficult to completely inhibit biofilm formation due to the physiological heterogeneity of bacteria in biofilms and their resistance to antibiotics. Therefore, the demand for new antimicrobials has been increasing to prevent and eradicate biofilms.

US patent application US20120251627 relates to an antimicrobial composition comprising pyrithione or a pyrithione complex; and a zinc or copper or silver source selected from the group consisting of salts, oxides, hydroxides, sulphates, chlorides, zinc or copper or silver metals and combinations thereof; wherein the weight ratio of the zinc or copper or silver source to the pyrithione or the pyrithione complex is in the range from about 1:300 to about 50:1, and wherein the antimicrobial composition has an enhanced biocidal effect against a variety of free-living microorganisms or biofilms. Although the composition allows control over the growth and proliferation of biofilms, these efforts have had only limited success. Research has indicated that biofilm cells are much more resistant to disinfection than free-living cells, largely due to the extracellular slime layer that acts as a protective layer, and the components of said invention do not allow the biocide to adhere to hard, rigid, non-porous surfaces. In addition, strategies to control microbial contamination hitherto have typically been developed in a laboratory against free-living organisms, and little to no attention has been paid to determining the efficacy of antimicrobial agents against biofilm. Unfortunately, resistant biofilms are generally not affected by previously used antimicrobials.

There are many biocidal products in the art that allow protection on different surfaces, however, there is a need for a biocidal product that acts effectively and indefinitely and that also ensures that the user is safe and certain that the surface is protected by means of a luminescent identification label.

Certain fluorescent compounds are useful for securely marking items, such as documents, where the mark does not reflect incident visible light (i.e. is invisible under normal light), but emits a visible mark when subjected to ultraviolet (UV) light. US patent US4504084, for example, describes a method of marking originals with a fluorescent compound so that copies can be distinguished from their originals. Another method for applying fluorescent markers to surfaces includes US patent US6217794, which describes a method for marking fibres and fibrous material with near-infrared compositions using cross-linking agents.

Certain triazines are known to be active when exposed to ultraviolet light. For example, US Patent US3167565 describes an organic triazine compound useful as an optical brightener that supposedly has an affinity for binding to fibrous substrates including cellulose, nylon and wool. Other triazine compounds are also known to be active when exposed to UV light, but these compounds are notably characterised as UV absorbers, i.e. compounds that absorb light in the ultraviolet region of the electromagnetic spectrum, but they do not re-emit the absorbed energy as visible light. The overall structure of a UV-absorbing molecule allows it to absorb a broad spectrum of high-energy ultraviolet rays and then release the absorbed energy as lower-energy rays (generally, at a nonspecific wavelength or at a wavelength outside the visible band).

Lastly, it is worth highlighting US patent application US20110268896, which describes a composition comprising an organic fluorophore or a derivative thereof; as well as articles of manufacture marked with the fluorophore, methods for marking articles with the fluorophore, and methods for producing a fluorescent fibre.

The present invention discloses a transparent biocidal product that allows the protection of surfaces, particularly non-porous hard or rigid surfaces; furthermore, its presence can be detected using infrared radiation. This product assures permanent and safe antimicrobial protection of the surfaces on which it is applied, certifying its antimicrobial protection effect. Therefore, the application thereof represents a safe alternative for protecting the surface of any type of materials, eliminating the need for continuous disinfection and thereby achieving a very significant reduction in the consumption of chemicals, with the savings and sustainability that this entails.

The biocidal product of the present invention is intended for application particularly in the health sectors. Given that healthcare spaces are exposed to pathogenic agents, they are highly susceptible to becoming a major breeding ground for same, which increases possible infections in both patients and healthcare workers who are in these areas. Currently, due to the short-lasting effect of disinfectants, it is uncertain whether treated surfaces are contaminated again and it is not certain when they will be contaminated again until the next cleaning is carried out. The application of the product provides a guarantee of disinfection as its presence, and therefore its continuous disinfection action, can be detected 24 hours a day, 7 days a week. The product is a combination of biocidal resins based on polysiloxanes in an aqueous base, quaternary ammoniums and ionic silver to impart antimicrobial capabilities.

With respect to their luminescence character, the materials doped with "rare earth" ions exhibit very significant advantages over the prior art and compared to standard fluorescent dyes, such as invisibility to ambient light and, especially, low-cost commercial infrared light activation by means of converting this invisible reading light into a readily detectable and identifiable visible product emission. Furthermore, "rare earth" elements (lanthanides) exhibit sharp emission peaks, long fluorescence lifetime, low long-term toxicity and high chemical photostability and ease of handling, making them an excellent option for various optical security applications.

### DESCRIPTION OF THE DRAWINGS

To complement the description that is being made and for the purpose of helping to better understand the features of the invention, according to a preferred practical exemplary embodiment thereof, a set of figures is attached as an integral part of said description wherein the following has been depicted with an illustrative and non-limiting character:

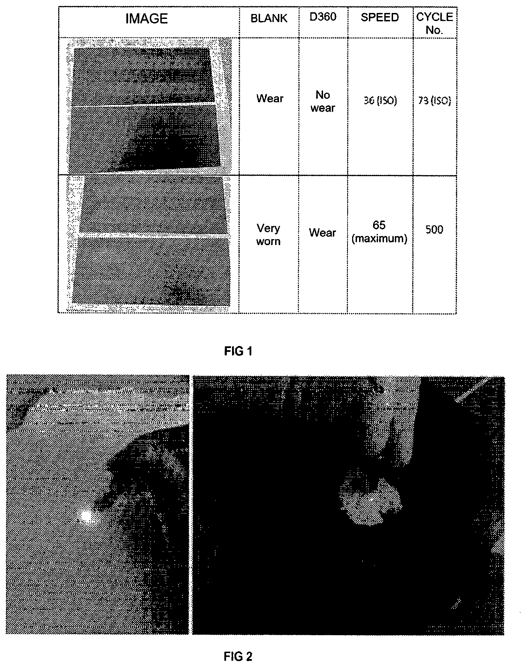

Figure 1. The figure shows the results of abrasion resistance tests to check the product's resistance to friction. The Elcometer 1720 abrasion resistance tester has been used to measure abrasion resistance (ASTM D2486) by determining the number of cycles in which a surface is subjected to an abrasive agent. This equipment subjects the surface to different cycles to determine the wear of the product applied to the surface for a given number of cycles (after 1000 cycles, exceeding the recommendation of the standard, there is still product at 65 rpm). This has been compared by performing the test on a blank (no product) and on the sample with the product applied, at different cycles.
Figure 2. The figure shows the biocidal product with the incorporation of the luminescent additive, determining a visual emission of green colour observable under invisible infrared reading light. By means of encrypting the luminescent signal, this emission allows the counterfeit-proof originality of the product to be certified.

### PREFERRED EMBODIMENT OF THE INVENTION

The present invention discloses a biocidal product for application on surfaces, particularly non-porous hard surfaces, incorporating an identification marker which allows certifying that the product is present and therefore allows signalling that it maintains protection.

First, it is necessary for the biocidal product and the added marker additive to be stable in the mixture and to maintain the dispersion of the additive in the biocidal composition when applied to non-porous hard surfaces, whereby maintaining the antimicrobial and luminescent properties and in turn allowing them to act together.

The biocidal product is formed by the mixture of a biocidal composition and a luminescent additive dispersed therein, wherein the biocidal composition is formed by adding to deionised water a polydimethyl siloxane resin of 0.10-1.0% by weight that acts as a carrier for the biocidal agents and a mixture formed by the combination of 0.5-5.0% dimethyl didecyl ammonium chloride and 0.5-5.0% of dimethyloctadecyl[3-(trimethoxysilyl)propyl] ammonium chloride that act as a biocide in a medium formed by the mixture of 0.5-1.0% methanol and 0.1-1.0% ethanol. A silver ion solution preferably consisting of silver phosphate glass in a proportion of 0.1-1%, which gives it an additional antibacterial effect and allows it to adhere to non-porous hard surfaces due to the structural properties of silver phosphate glass, is added to the resulting mixture. All these percentages are detailed with respect to the total percentage of the biocidal product.

The polydimethyl siloxane resin allows the biocidal product to adhere to any surface to be treated, particularly non-porous hard and rigid surfaces. Dimethyl didecyl ammonium chloride is a biocide effective against bacteria, in turn being superior to benzalkonium chloride in killing bacteria that already have chemical resistance; it furthermore has an excellent emulsifying effect and good solubility, which allows the mixture to be stable in a wide range of temperatures and to be used in the present product in the medium where luminescent additives that act as markers can be dispersed.

Dimethyloctadecyl(3-trimethoxysilylpropyl) ammonium chloride is a disinfectant that is used as a preservative and fungicide and allows use thereof as a coupling agent for polydimethyl siloxane resin. As a cationic quaternary ammonium salt, it will be completely ionised in an aqueous solution. The resulting product formed by dimethyloctadecyl(3-trimethoxysilylpropyl) ammonium chloride can be used as a material preservation treatment.

Silver ion solution preferably consisting of silver phosphate glass is a soluble material that can act as a unique system for the controlled delivery of silver ions. The ions are incorporated into the glass structure and are not a separate phase; therefore, the release rate thereof is defined by the overall degradation rate of the glass. Phosphate-based glasses show that the release of an optimal amount of silver ions from silver-doped phosphate-based glasses can cause a significant reduction of bacterial growth on surfaces. Although high concentrations of free silver ions are needed for bactericidal action against surfaces, it is very important not to sacrifice any cyto/biocompatibility aspect of the material while maintaining an effective antimicrobial effect. The amount of silver released from the investigated silver-doped glasses is well below levels that are cytotoxic to human cells.

Therefore, the presence of silver phosphate glass allows the biocidal composition to have a continuous disinfecting action 24 hours a day, 7 days a week. The coating formed by this biocidal composition makes it possible to achieve, with a thickness of 10-30 microns, a reduction of 99.0% or more in the growth of viruses, bacteria and fungi with a minimum duration of 1 year on hard surfaces treated by means of a single application.

The incorporation into the biocidal composition of metal oxides (aluminosilicate glass containing rare earth ions as dopants) allows a coating of said composition to be detected and identified by means of infrared light that induces a readily detectable luminescence (green light). This luminous additive exhibits a codable emitted light pattern that allows the compound to be unmistakably identified, certifying its authenticity, which differentiates them from other similar products on the market.

State-of-the-art anti-counterfeiting technologies are experiencing a steadily growing global demand in fields such as product anti-counterfeiting. In this sense, high-security anti-counterfeit labels with luminescent materials are at the forefront of the latest encryption technologies based on coded luminescent pattern recognition. In particular, materials doped with luminescent "rare earth" ions exhibit very significant advantages compared to standard fluorescent dyes: invisibility to ambient light and activation by low-cost commercial infrared light by means of converting this invisible reading light into visible product emission. Furthermore, "rare earth" elements (lanthanides) exhibit sharp emission peaks, long fluorescence lifetime, low long-term toxicity and high chemical photostability and ease of handling, making them an excellent option for various optical security applications.

Once the biocidal mixture is prepared, the luminescent additive is dispersed in said previously prepared biocidal composition, adding with respect to the total weight of the product 0.03-2.5% of the luminescent additive in deionised water, such that the proportion of deionised water in the final biocidal product is 82.5-98.6%.

The luminescent additive that acts as a marker allowing the identification of the biocidal composition is made up of 20-30% silica in combination with alumina in a proportion of 10-30% and 30-50% calcium fluoride by weight. Materials doped with luminescent "rare earth" ions, such as 0.5-3% erbium(III) fluoride; 5-15% ytterbium(III) fluoride; a maximum of 5% thulium(III) fluoride; and a maximum of 5% europium(III) fluoride are added to this mixture. All these percentages are with respect to the total weight of the luminescent additive.

Silica gel is used as a cold light coating, i.e. it does not involve the production of heat, and is particularly useful in the main physical phenomena that allow light to be produced with these characteristics, such as phosphorescence and fluorescence. Furthermore, it is used as an insulating coating, forming a thin layer on the application surface similar to a laminate, allowing a surface to be protected from and preserved against the action of water, scratches or other damage due to abrasion. Alumina acts as a selective adsorbent allowing the level of fluoride in the mixture to be down-adjusted.

Calcium fluoride significantly increases in fluorescence with broad emission, appearing within the range of acceptable targets. The optically active compounds in the additive consist of "rare earth" luminescent ions. Ytterbium fluoride increases the absorption of infrared light and subsequent conversion to visible light by means of the remaining luminescent elements in the marker composition (erbium, thulium and europium fluorides). Erbium-doped silica glass fibres are the active element to amplify the luminescence effect, and their homogenisation is increased by the presence of alumina. Ytterbium fluoride also increases the amplification of the material as a luminescent marker, and thulium(III) fluoride is used to improve the up-conversion fluorescence from infrared to ultraviolet and visible in fluorinated glass. Europium fluorescence is used to improve the colour coding effect emitted from the marker additive.

It has been determined in different tests that the luminescent additive in the product emits only under invisible infrared light (frequency of about 980 nm) with a high intensity brightness, due to the lack of background noise because of zero auto fluorescence of the textile substrate or the surface where it has been applied. Additionally, luminescence intensity ratios between the different visible emission bands (blue, green and red) observed after conversion of the invisible infrared reading light, can be tuned on demand (by changing concentration level and type of "rare earth" doping ions). In other words, encoding the light emitted by means of an anti-counterfeit code, as it is designed and synthesised on demand at the source, providing a novel and disruptive proof of concept for light-coded security patterns.

The resulting biocidal product is colourless and will be applied in a nebuliser format and spread over the surface to be protected with the aid of a microfibre cloth. To determine the thickness to be applied to the wet surface, a precision wet film comb is used which allows, as a result of its "teeth", the range in which the wet film is applied to be determined. The dry thickness will be checked using the Positector 6000, which is an electronic device which, by means of its galvanic cell, digitally returns its thickness by positioning it on a ferrous surface.

To determine the effectiveness of this biocidal coating on the different microorganisms, the following tests have been carried out:
- UNE-EN ISO 22196 Measurement of antibacterial activity on plastics and other non-porous surfaces.
- UNE-EN ISO 14476 Chemical disinfectants and antiseptics - Quantitative suspension test for the evaluation of virucidal activity in the medical area.
- UNE-EN ISO 13697 Chemical disinfectants and antiseptics - Quantitative non-porous surface test for the evaluation of bactericidal and/or fungicidal activity of chemical disinfectants used in food, industrial, domestic and institutional areas - Test method and requirements without mechanical action.
- UNE-EN ISO 18184 - Test methods for the determination of antiviral activity of products against specific viruses.

A biocidal surface protection of 12-18 months has been determined, thus allowing to keep hard non-porous surfaces protected for a long time with a single application. The product is effective for the biocidal protection of various non-porous hard surfaces against various microorganisms such as *Escherichia coli, Staphylococcus aureus, Enterococcus hirae, Pseudomonas aeruginosa, Candida albicans,* as well as certain types of viruses with and without an outer envelope.

As an added value, its luminescent characteristic confers to the present invention an important distinction with respect to the art, since it allows the user to visualise where the product has been applied and recognise a coded light pattern to demonstrate that the product is original. With a simple and compact portable handheld device (pocket spectrometer / App application to a smartphone camera), it will allow the end user, by illuminating with a low-cost commercial infrared laser pointer, to detect the coded luminescent pattern and therefore verify that the applied product is protected with the original biocidal composition. This luminescence technology with infrared light and colour coding using "rare earth" ions is at the forefront of anti-counterfeiting light technology, in the line of techniques used in the authentication of documents (passports, security inks) and in the security encryption of legal tender banknotes. Therefore, its use in the original identification of the biocidal product constitutes without a doubt an absolute novelty that marks a clear substantial difference with other products with similar characteristics on the market. The biocidal product is formulated in an aqueous base, therefore, good drying times ranging from 2-3 minutes are obtained. This product is easy to apply. By means of a nebuliser, it allows effective application on the surface with the aid of a cloth.

## Claims

1. A biocidal product with a luminescent marker additive and the application thereof on non-porous hard surfaces, **characterised in that** the biocidal product is formed by the mixture of a biocidal composition and a luminescent additive dispersed therein, wherein the biocidal composition comprises with respect to the total weight of the product a polydimethyl siloxane resin in deionised water of 0.10-1.0% by weight that acts as a carrier for the biocidal agents; a mixture of biocidal agents formed by the combination of 0.5-5.0% dimethyl didecyl ammonium chloride and 0.5-5.0% dimethyloctadecyl[3-(trimethoxysilyl)propyl] ammonium chloride; a mixture of 0.5-1.0% methanol, 0.1-1.0% ethanol, and a silver ion solution preferably consisting of silver phosphate glass in a proportion of 0.1- 1%; and a luminescent additive in deionised water in a proportion of 0.03-2.5% with respect to the total weight of the product, wherein the luminescent additive comprises 20-30% silica in combination with alumina gel in a proportion of 10-30%; 30-50% calcium fluoride by weight; and a mixture of materials doped with luminescent "rare earth" ions, comprising 0.5-3% erbium(III) fluoride; 5-15% ytterbium(III) fluoride; a maximum of 5% thulium(III) fluoride; and a maximum of 5% europium(III) fluoride, and wherein the proportion of deionised water in the final biocidal product is 82.5-98.6%.

2. The biocidal product with a luminescent marker additive and the application thereof on non-porous hard surfaces according to claim 1, **characterised in that** it exhibits emission only under invisible infrared light at a frequency of about 980 nm.

3. The biocidal product with a luminescent marker additive and the application thereof on non-porous hard surfaces according to claim 1, **characterised in that** the coating on a surface treated with the product must have a thickness of 10-30 microns.
